# EUROPÄISCHE PATENTANMELDUNG

(11) **EP 1 696 162 A1**
(43) Veröffentlichungstag der Anmeldung: **30.08.2006**
(21) Anmeldenummer: 06002324.9
(22) Anmeldetag: 04.02.2006
(51) Int. Cl.: F16K 31/56, F16K 3/08

(54) **Ventiloberteil für Armaturen**

(30) Priorität: 23.02.2005 DE 202005002894 U
(71) Anmelder: Flühs Drehtechnik GmbH, D-58515 Lüdenscheid (DE)
(72) Erfinder: Schwarzer, Peter, 58515 Lüdenscheid (DE); Thurau, Friedrich, 58513 Lüdenscheid (DE)
(74) Vertreter: Dörner, Lothar

(57) **Zusammenfassung**

Die Erfindung betrifft ein Ventiloberteil für Armaturen mit einem Kopfstück (1), das von einer Spindel (2) durchsetzt ist, mit Mitteln zum Absperren und mit einer Dichtung, die mit der Armatur zur Anlage kommt, dadurch gekennzeichnet, dass eine radial wirkende Arretiervorrichtung (8) vorgesehen ist.

## Beschreibung

Die Erfindung betrifft ein Ventiloberteil für Armaturen mit einem Kopfstück, das von einer Spindel durchsetzt ist, mit Mitteln zum Absperren und mit einer Dichtung, die mit der Armatur zur Anlage kommt.

Mit Hilfe von Ventiloberteilen wird der Austritt von Medien aus Armaturen gesteuert. Für diesen Zweck wird das Ventiloberteil mittels seines Kopfstücks in das Gehäuse einer Armatur geschraubt; auf seine Spindel wird ein Drehgriff oder Hebel gesteckt. Bei bekannten Ventiloberteilen (vgl. DE 32 07 895 C2, DE 36 38 180 C2, DE 87 15 044 U1) sind jeweils zwei Scheiben zur Steuerung des Durchflusses vorgesehen. Die Scheiben sind aus keramischem Material hergestellt. Eine der beiden Scheiben - Steuerscheibe - ist mit Hilfe eines mit der Spindel in Verbindung stehenden Mitnehmers drehbar in dem Ventiloberteil angeordnet. Die andere Scheibe - Einlaßscheibe - ist eine feste Ventilsitzscheibe, auch als Festscheibe bezeichnet. Bei Drehung der Steuerscheibe gleiten die Scheiben aneinander. Auf der dem Ventilsitz der Armatur zugewandten Seite ist eine Dichtung angeordnet, die an der Einlaßscheibe anliegt. Die Dichtung überragt die Stirnfläche des Ventiloberteils. Sie dient zur Abdichtung sowohl zur Einlaßscheibe als auch zum Ventilsitz der Armatur.

Darüber hinaus ist aus der DE 200 08 679 U1 ein Ventiloberteil für Armaturen bekannt, bei dem ein Absperren dadurch erzielt ist, dass die Steuerscheibe im Anschluss an einen Impuls selbsttätig von ihrer Durchlassstellung in ihre Absperrposition wechselt. Das Ventiloberteil erlaubt daher lediglich zwei Betätigungspositionen, nämlich die Position "ganz geöffnet" und die Position "ganz geschlossen". Die Betätigung des Oberteils erfolgt durch Drücken einer Kappe entgegen einer Feder. Dadurch wird eine auf den Griff ausgeübte Sperrung freigegeben. Der Griff ist dann drehbar. Die Drehung des Griffes wird auf die Spindel übertragen, wodurch das Ventil öffnet. Die Betätigung in die Schließposition erfolgt in vergleichbarer Weise.

Die bekannten Ventiloberteile erfüllen alle an sie gestellten Aufgaben. Allerdings ist der konstruktive Aufwand durch das Vorsehen eines in Axialrichtung des Ventiloberteils bewegbaren Griffes sowie der Mechanik für die Sperrung des Ventils recht aufwendig. Infolge dessen ist die Herstellung des Ventiloberteils aufwendig.

Hier will die Erfindung Abhilfe schaffen. Der Erfindung liegt die Aufgabe zugrunde, ein Ventiloberteil für Armaturen zu schaffen, das lediglich die Positionen "ganz geöffnet" und "ganz geschlossen" ermöglicht und dabei den konstruktiven Aufwand im Verhältnis zu bekannten Ventiloberteilen reduziert. Gemäß der Erfindung wird diese Aufgabe dadurch gelöst, dass eine radial wirkende Arretiervorrichtung vorgesehen ist.

Mit der Erfindung ist ein Ventiloberteil für Armaturen geschaffen, das lediglich zwei Positionen, nämlich die Position "ganz geöffnet" und die Position "ganz geschlossen" zulässt. Gleichzeitig ist das Ventiloberteil einfach aufgebaut, wodurch die Herstellkosten gering sind. Zudem ist der Montageaufwand des erfindungsgemäßen Ventiloberteils gering.

Andere Ausgestaltungen und Weiterbildungen der Erfindung sind in den übrigen Unteransprüchen angegeben. Ein Ausführungsbeispiel der Erfindung ist in der Zeichnung dargestellt und wird nachfolgend im einzelnen beschrieben. Es zeigen:
- Fig. 1: in vergrößerter Darstellung ein Ventiloberteil teilweise in Ansicht, teilweise im Axialschnitt;
- Fig. 2: den Schnitt entlang der Linie A-R in Figur 1 ;
- Fig. 3: in vergrößerter Darstellung ein Ventiloberteil teilweise in Ansicht, teilweise im Axialschnitt in anderer Ausbildung;
- Fig. 4: den Schnitt entlang der Linie A-B in Figur 3;
- Fig. 5: in vergrößerter Darstellung ein Ventiloberteil teilweise in Ansicht, teilweise im Axialschnitt in anderer Ausbildung;
- Fig. 6: den Schnitt entlang der Linie A-B in Figur 5;
- Fig. 7: in vergrößerter Darstellung ein Ventiloberteil teilweise in Ansicht, teilweise im Axialschnitt in anderer Ausbildung;
- Fig. 8: den Schnitt entlang der Linie A-B in Figur 7;
- Fig. 9: in vergrößerter Darstellung ein Ventiloberteil teilweise in Ansicht, teilweise im Axialschnitt in anderer Ausbildung;
- Fig. 10: den Schnitt entlang der Linie A-B in Figur 9;
- Fig. 11: in vergrößerter Darstellung ein Ventiloberteil teilweise in Ansicht, teilweise im Axialschnitt in anderer Ausbildung;
- Fig. 12: den Schnitt entlang der Linie A-B in Figur 11;
- Fig. 13: in vergrößerter Darstellung ein Ventiloberteil teilweise in Ansicht, teilweise im Axialschnitt in anderer Ausbildung;
- Fig. 14: den Schnitt entlang der Linie A-B in Figur 13;
- Fig. 15: in vergrößerter Darstellung ein Ventiloberteil teilweise in Ansicht, teilweise im Axialschnitt in anderer Ausbildung;
- Fig. 16: den Schnitt entlang der Linie A-B in Figur 15;
- Fig. 17: in vergrößerter Darstellung ein Ventiloberteil teilweise in Ansicht, teilweise im Axialschnitt in anderer Ausbildung;
- Fig. 18: den Schnitt entlang der Linie A-B in Figur 17;
- Fig. 19: die Untersicht auf eine Steuerscheibe;
- Fig. 20: die Darstellung einer Steuerscheibe teilweise in Ansicht, teilweise im Axialschnitt;
- Fig. 21: die Draufsicht auf die in Figur 19 dargestellte Steuerscheibe;
- Fig. 22: die Untersicht auf eine Scheibenführung;
- Fig. 23: die Darstellung einer Scheibenführung im Axialschnitt;
- Fig. 24: die Draufsicht auf die in Figur 22 dargestellte Scheibenführung;
- Fig. 25: die Untersicht auf eine Einlassscheibe;
- Fig. 26: die Darstellung einer Einlassscheibe teilweise in Ansicht, teilweise im Axialschnitt;
- Fig. 27: die Draufsicht auf die in Figur 25 dargestellte Einlassscheibe;
- Fig. 28: die Draufsicht einer Steuerscheibe in anderer Ausbildung und
- Fig. 29: den durch die in Figur 28 dargstellte Steuerscheibe.

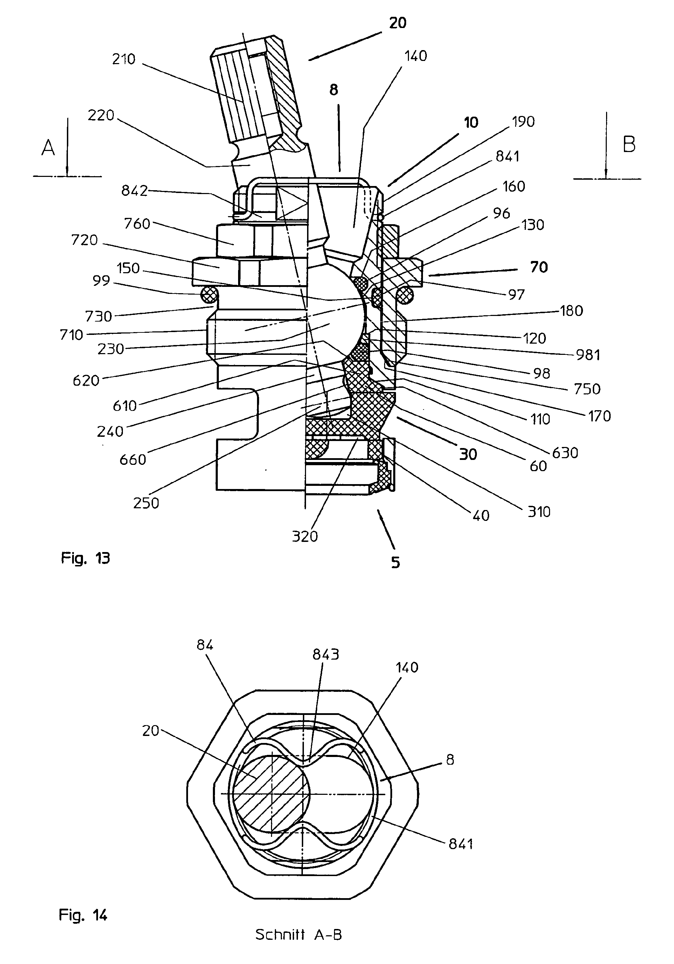

Die als Ausführungsbeispiele gewählten Ventiloberteile weisen ein Kopfstück 1, 10 auf, das von einer in ihm radial geführten Spindel 2, 20 mittig durchsetzt ist. Mit der Spindel 2, 20 ist eine Steuerscheibe 3, 30 formschlüssig verbunden und im Kopfstück 1 radial geführt. An dem der Spindel 1 abgewandten Seite der Steuerscheibe 3, 30 ist eine Einlaßscheibe 4, 40 in dem Kopfstück 1, 10 vorgesehen, an die sich ein Dichtring 5 anschließt, der mit dem Ventilsitz einer - nicht dargestellten - Armatur zur Anlage kommt. In den Ausführungsbeispielen nach den Figuren 13 bis 18 weisen die Ventiloberteile jeweils eine Scheibenführung 60 auf, die drehfest in dem Kopfstück 10 angeordnet ist und in der die Spindel 20 geführt ist. Weiterhin ist um das Kopfstück 10 eine Überwurfhülse 70 angeordnet. Alle Ventiloberteile sind jeweils mit einer Arretiervorrichtung 8 versehen.

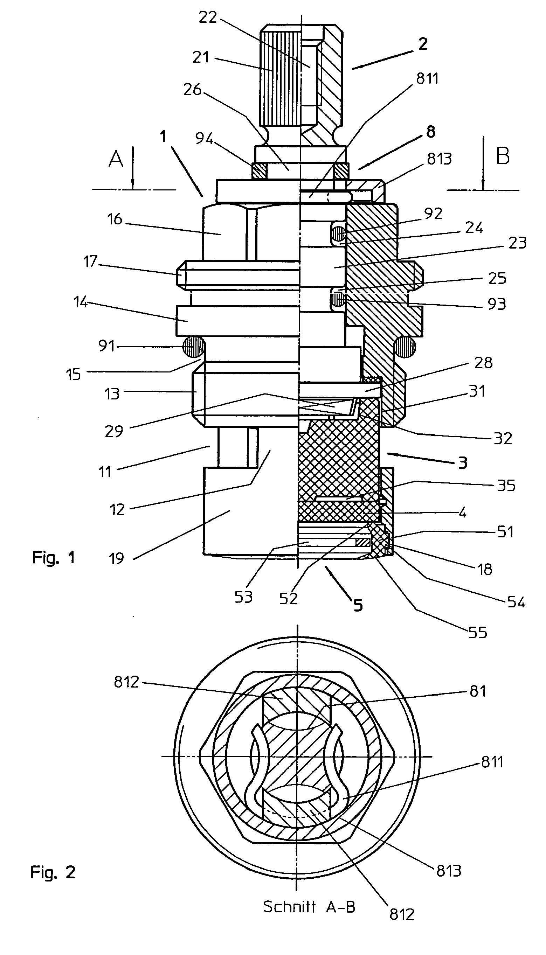

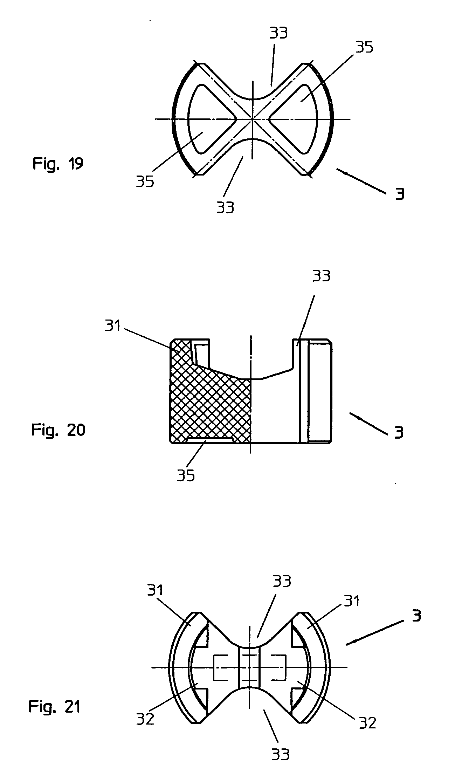

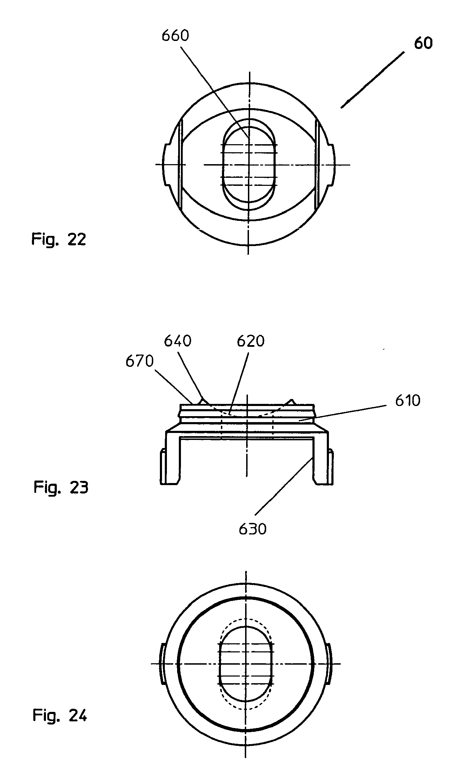

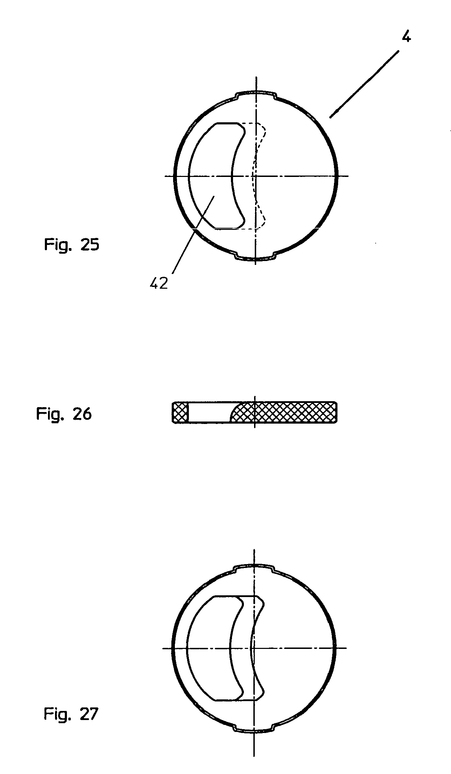

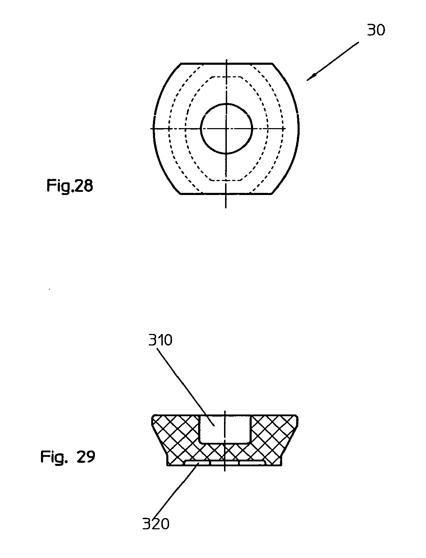

Nachfolgend ist der Aufbau der Ventiloberteile gemäß der Figuren 1 bis 12 exemplarisch anhand des Ausführungsbeispiels nach den Figuren 1 und 2 i.V.m den Figuren 19 bis 29 erläutert.

Das Kopfstück 1 besteht aus einem symmetrischen Hohlkörper, dessen beide Stirnflächen offen sind. Auf der der Armatur zugewandten Seite weist das Kopfstück einem hülsenartigen Teil 19 auf. In dem Teil 19 sind Durchtrittsfenster 11 vorgesehen, die von Längsstegen 12 begrenzt sind. Im Ausführungsbeispiel sind zwei durch zwei Stege 12 begrenzte Fenster 1 vorgesehen. Im Anschluss an die Fenster 11 ist das Kopfstück 1 aussen mit einem Anschlussgewinde 13 versehen. Mit Hilfe des Anschlussgewindes 13 ist das Kopfstück in das Gehäuse der Armatur schraubbar.

Nach dem Einschrauben liegt ein Einschraubbund 14 des Kopfstücks 1 auf dem Gehäuse der Armatur auf. Der Einschraubbund 14 weist auf seiner dem Anschlussgewinde 13 zugewandten Seite eine Ringnut 15 für die Aufnahme eines O-Rings 91 auf. Das Einschrauben in die Armatur erfolgt mittels eines Außenmehrkants 16, der auf der dem Anschlussgewinde 13 abgewandten Seite des Einschraubbundes 14 vorgesehen ist. Dieser Teil des Kopfstücks 1 kann außen - wie dargestellt - mit einem zusätzlichen Außengewinde 17 für die Aufnahme einer nicht dargestellten Hülse versehen sein. Dieser Teil des Kopfstücks kann aber auch außen insgesamt nach Art eines Kegelstumpfes ausgebildet sein, der im Bereich des Flansches Ausnehmungen nach Art eines Mehrkants aufweist. In dem hülsenartigen Teil 19 ist innen im Bereich des dem Ventilsitz zugewandten Endes eine Hinterdrehung 18 angeordnet. Im Anschluss daran sind zwei - nicht dargestellte - sich diametral gegenüberliegende Ausnehmungen vorgesehen.

Die Spindel 2 ist im Wesentlichen massiv ausgeführt. Sie ist an ihrer dem Wasserzulauf abgewandten Stirnseite außen als Außenvielkant 21 ausgeführt und innen mit einem Sackloch 22 mit Innengewinde für die Befestigung eines nicht dargestellten Drehgriffs versehen. Anschließend ist außen an der Spindel eine Zylinderfläche 23 vorgesehen, mit der die Spindel 2 in dem Kopfstück 1 radial geführt ist. In der Zylinderfläche 23 sind zwei Ringnuten 24 und 25 vorgesehen, die O-Ringe 92 und 93 aufnehmen. Die O-Ringe 92 und 93 dichten die Spindel 2 gegen das Kopfstück 1 ab. Zwischen der Zylinderfläche 23 und dem Außenvielkant 21 ist ein Einstich 26 vorgesehen, in den eine Wellensicherung 94 in Form eines Sprengrings federnd eingelegt ist. Die Wellensicherung 94 verhindert das Eindringen der Spindel in das Kopfstück 1 über das vorgesehene Maß hinaus.

Die Spindel 2 ist in dem Kopfstück 1 drehbar. Auf der dem Außenvielkant 21 entgegengesetzten Seite ist eine Scheibe 28 vorgesehen, die auf ihrer der Armatur zugewandten Seite einen Mitnehmer 29 aufweist.

Die Steuerscheibe 3 hat eine im Wesentlichen tonnenförmige Ausbildung, aus der zwei sich gegenüberliegende Kreisausschnitte 33 ausgenommen sind (Figuren 19 und 21). Die Kreisausschnitte 33 weisen im Ausführungsbeispiel einen Winkel von ca. 90° auf. Auf ihrer der Spindel 2 zugewandten Seite weist die Steuerscheibe 3 einen ringförmigen Ansatz 31 auf. Der ringförmige Ansatz 31 umfasst in montiertem Zustand den Mitnehmer 29 der Spindel 2. Am Fuss des Ansatzes 31 sind Ausnehmungen 32 ausgebildet, in die der Mitnehmer 29 fasst. Auf der der Spindel 2 abgewandten Stirnseite sind in der Steuerscheibe 3 zwei sich gegenüberliegende sektorförmige Vertiefungen 35 vorgesehen.

Die Einlaßscheibe 4 weist auf ihrem Umfang zwei - nicht dargestellte - sich diametral gegenüberliegende Nasen auf. Mit den Nasen fasst die Scheibe 4 in die Ausnehmungen, die in dem hülsenförmigen Teil 19 des Kopfstücks 1 vorgesehen sind. Die Einlaßscheibe 4 ist damit drehfest in dem Kopfstück 1 angeordnet. Die Scheibe 4 weist sektorförmige Durchtrittsöffnungen auf. Im Ausführungsbeispiel sind zwei sich diametral gegenüberliegende Durchtrittsöffnungen vorgesehen.

Der Dichtring 5 ist nach Art einer Lippendichtung ausgebildet. Er besteht im Wesentlichen aus einem Mittelstück 51, an dem auf seiner der Scheibe 4 zugewandten Stirnseite eine Lippe 52 angeformt ist. Die Lippe 52 hat im Querschnitt eine im Wesentlichen trapezförmige Ausbildung. Die Lippe 52 ist unter einem Winkel zur Horizontalen angeordnet. Die Außenfläche der Lippe 52 liegt an der Scheibe 4 dichtend an (Figur 1). Im Anschluss an die Lippe 52 ist zwischen dieser und dem Mittelstück 51 ein Ring 53 angeordnet. Das Mittelstück 51 ist außen mit einem Bund 54 versehen, der in die Hinterdrehung 18 des hülsenartigen Teils 19 greift. Innen ist an dem Mittelstück 51 eine Wulst 55 ausgebildet. In montiertem Zustand des Ventiloberteils liegt die Außenseite der Wulst 55 plan auf dem Ventilsitz der Armatur auf.

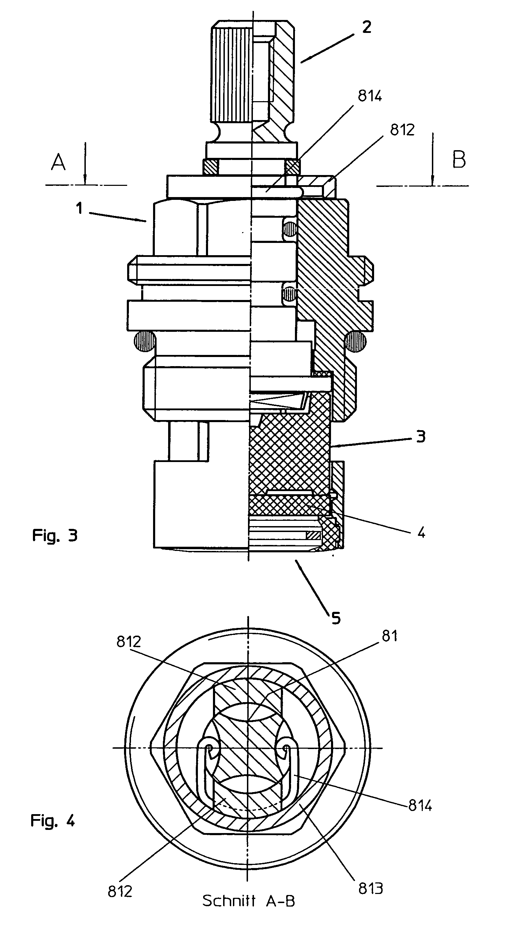

Die Arretiervorrichtung 8 ist im Ausführungsbeispiel nach den Figuren 1 bis 4 zwischen der Ringnut 24 und dem Einstich 26 ausgebildet. Sie umfasst eine Kalotte 81, die in der Spindel 2 ausgebildet ist (Figuren 2 und 4). Die Kalotte 81 ist an zwei sich gegenüberliegenden Seiten von einem Federdraht 811, 814 umgeben. Der Federdraht 811, 814 hat eine angenähert U-förmige Ausbildung. Bei dem Federdraht 811 sind die beiden sich gegenüberliegenden Schenkel eingezogen ausgebildet, sodass sie in ihrer Form der Kalotte 81 angepasst ausgebildet sind und unter dem Einfluss der Federvorspannkraft sich an diese anschmiegen. Bei dem Federdraht 814 sind die freien Enden der beiden parallelen Schenkel an ihren freien Enden einander zugewandt eingerollt ausgeführt. Die eingerollten Enden liegen an der Kalotte 81 unter dem Einfluss der Federvorspannung an.

Der zwischen den Schenkeln ausgebildete Steg der Federdrähte 811, 814 ist von einem Federarretiersteg 812 gehalten, der auf dem stirnseitigen Ende des Kopfstücks 1 vorgesehen ist. Der Federarretiersteg 812 bewirkt die verliersichere Anordnung der Federdrähte 811, 814 in dem Ventiloberteil. In den Ausführungsbeispielen nach den Figur 1 bis 4 ist die Arretiervorrichtung 8 von einer Scheibe 813 abgedeckt, die mit der Wellensicherung 94 in Berührung steht und zwischen dieser und dem äußersten Ende des Kopfstücks 1 geklemmt gehalten ist.

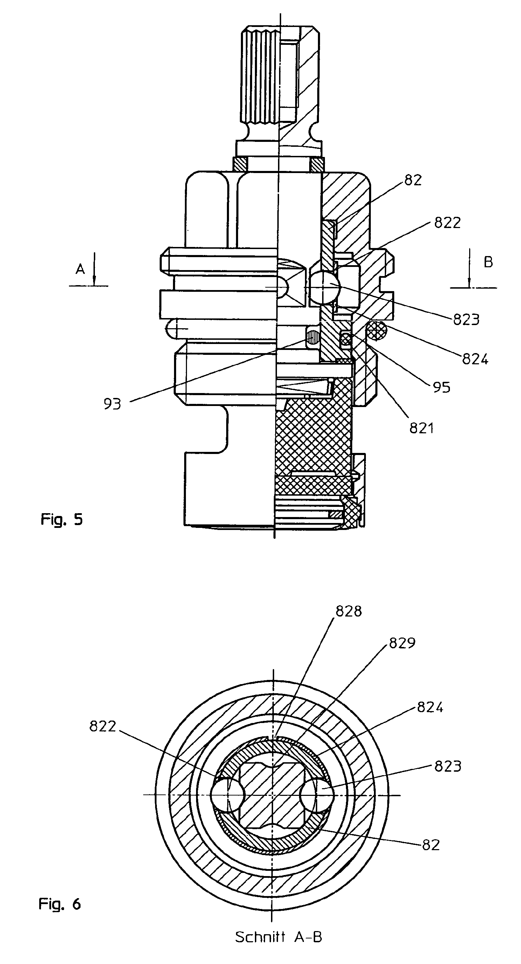

Im Ausführungsbeispiel nach den Figuren 5 und 6 ist die Arretiervorrichtung 8 im Kopfstück 1 angeordnet. Dabei ist die Spindel 2 etwa im Bereich des zusätzlichen Außengewindes 17 des Kopfstücks 1 von einer formschlüssigen Verdrehsicherung 82 umgeben. Die Verdrehsicherung 82 ist an ihrem dem Dichtring 5 zugewandten Ende gegen das Kopfstück 1 mit einem O-Ring 95, der in einer Ringnut 821 angeordnet ist, abgedichtet. Innen ist die Verdrehsicherung 82 durch den in der Ringnut 25 vorgesehenen O-Ring 93 abgedichtet. Diese Ausbildung eignet sich insbesondere für Fettkammer-Ventiloberteile. Die Verdrehsicherung 82 ist zudem mit im Ausführungsbeispiel zwei Bohrungen 822 versehen, die jeweils dem Durchtritt einer Kugel 823 dienen. Die Kugeln 823 stehen mit einer Kalotte 829 in Berührung. Außen sind die Kugeln 823 von einem Federring 824 gehalten, der Bohrungen 825 aufweist, durch die die Kugeln 823 abschnittsweise hindurchragen. Der Federring 824 ist mit einem Dehnspalt 828 versehen. Zur Sicherung der Bewegungsmöglichkeit der Kugeln 823 ist in dem Kopfstück 1 innen eine umlaufende Nut vorgesehen, die einen rinnenförmigen Nutgrund aufweist.

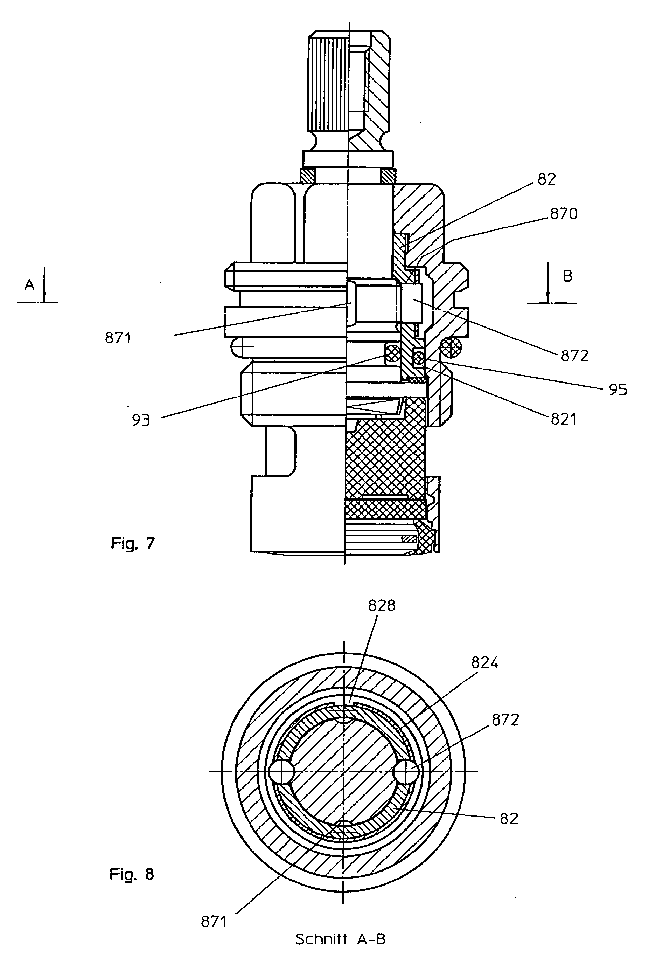

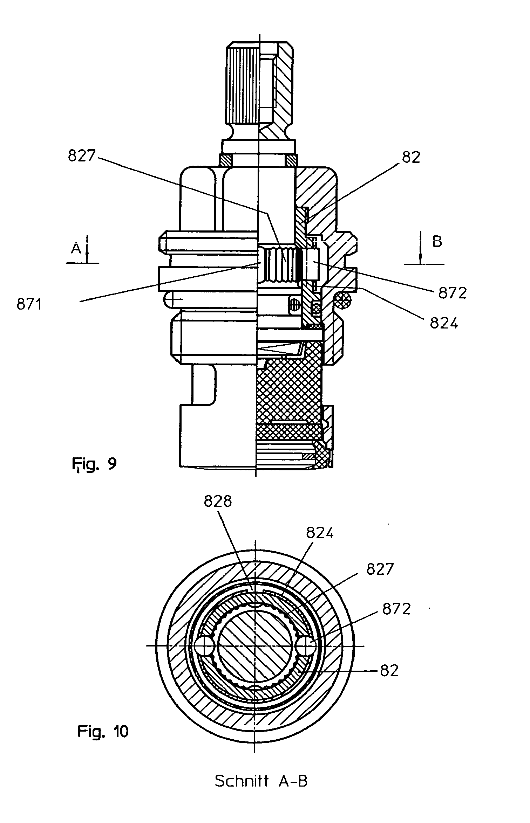

Das Ausführungsbeispiel nach den Figuren 7 und 8 ist im Wesentlichen vergleichbar zu dem Ausführungsbeispiel nach den Figuren 5 und 6 aufgebaut. Es ist lediglich auf die umlaufende Nut sowie die Kalotte 829 verzichtet. Auch finden anstelle von Kugeln Zylinderollen 872 Anwendung, die von der Verdrehsicherung 82 in Durchtrittsöffnungen 870 gehalten sind und in einer Vertiefung 871 in der Spindel 2 liegen. Sie sind von dem Federring 824 in der Vertiefung gehalten. Auch das Ausführungsbeispiel nach den Figuren 9 und 10 ist mit Rollen 872 versehen. Im Unterschied zum Ausführungsbeispiel nach den Figuren 7 und 8 ist jedoch nicht nur eine Vertiefung vorgesehen, vielmehr weist das Ventiloberteil eine nach Art eines Vielkants ausgebildete Ringfläche 827 auf. Die Ringfläche 827 übernimmt folglich die Funktion einer Rasterung.

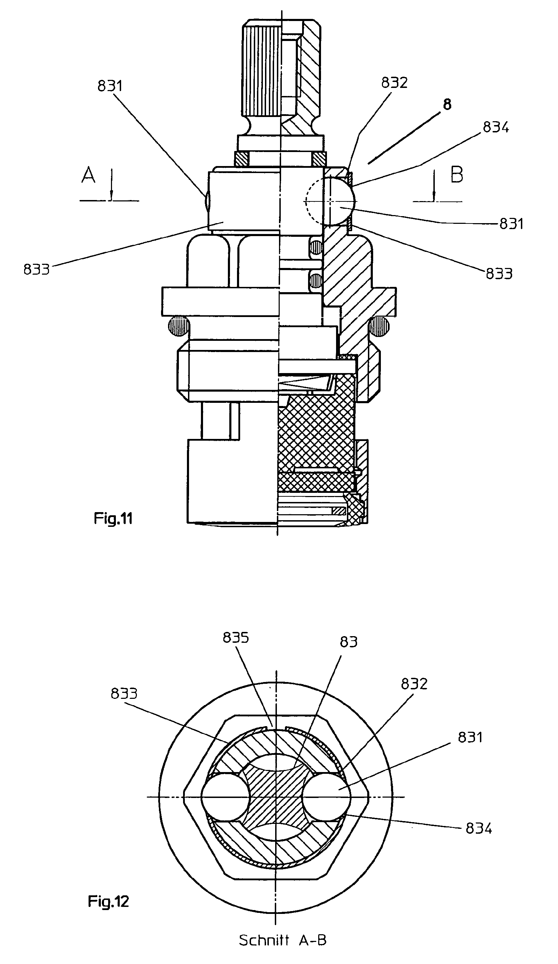

Im Ausführungsbeispiel nach den Figuren 11 und 12 ist die Arretiervorrichtung 8 vergleichbar zu dem Ausführungsbeispiel nach den Figuren 1 bis 4 in dem dem Dichtring 5 abgewandten Bereich des Ventiloberteils außen an dem Kopfstück 1 vorgesehen. Sie weist eine Kalotte 83 auf, die in der Spindel 2 ausgebildet ist. In die Kalotte 83 ragen im Ausführungsbeispiel zwei Kugeln 831, die in in dem Kopfstück 1 vorgesehenen radialen Bohrungen 832 angeordnet sind. Um die Bohrungen herum ist eine ringförmige Feder 833 angeordnet, die zwei Öffnungen 834 zum teilweisen Durchtritt der Kugeln 831 aufweist. Die Feder 833 weist zudem einen Dehnspalt 835 auf.

Im Folgenden ist der Aufbau der Ventiloberteile gemäß der Figuren 13 bis 18 anhand des Ausführungsbeispiels nach den Figuren 13 und 14 erläutert, wobei auf zu den bereits beschriebenen Ausführungsbeispielen gleiche Bauteile nicht mehr eingegangen ist. Für diese gleichen Bauteile sind gleiche Bezugszeichen verwendet.

In den Ausführungsbeispielen nach den Figuren 13 bis 18 ist auf der der Armatur abgewandten Seite im Anschluss an das Durchtrittsfenster 11 der Innendurchmesser des Kopfstücks 10 abgesetzt und mit geringerem Durchmesser fortgeführt. Der hierdurch gebildete Absatz ist als Fase 110 ausgeführt. Dem Verlauf des Kopfstücks weiter folgend ist ein Absatz 120 vorgesehen, an den sich eine zunehmende Durchmesserverjüngung in Form eines Kugelabschnitts 130 anschließt. Der Kugelabschnitt 130 läuft auf seiner der Armatur zugewandten Seite senkrecht aus; auf seiner der Armatur abgewandten Seite mündet der Kugelabschnitt 130 in ein konisch sich in Richtung der Armatur verjüngendes Langloch 140. Auf der der Armatur zugewandten Seite des Kopfstücks 10 ist eine Ringnut 160 eingebracht, die der Aufnahme eines O-Rings 96 dient. Außen ist der Durchmessers des Kopfstücks im Anschluss an das Fenster 11 zum Innendurchmesser über eine Fase 170 verjüngt ausgeführt. An die Fase 170 schließt sich ein Zylinder 180 an, an dessen dem der Armatur abgewandten Ende ein Außengewinde 190 angeordnet ist. Zwischen Fase 170 und Außengewinde 190 ist in den Zylinder 180 eine Dichtungsnut 150 zur Aufnahme eines O-Rings 97 eingebracht, der die Überwurfhülse 70 gegen das Kopfstück abdichtet.

Die Spindel 20 ist im Wesentlichen massiv ausgeführt. Sie ist an ihrer der Armatur abgewandten Stirnseite außen ebenfalls als Außenvielkant 210 ausgeführt, der zur Aufnahme eines - nicht dargestellten - Dreh- und Schwenkgriffs dient. Anschließend ist außen an der Spindel 20 eine Zylinderfläche 220 vorgesehen, mit der die Spindel 20 die Bohrung 140 durchsetzt und hierdurch einen Anschlag erfährt. An die Zylinderfläche 220 schließt sich ein kugelförmiger Abschnitt 230 an, an den sich eine weitere Zylinderfläche 240 anschließt. Das Spindelende 250 ist kugelförmig ausgebildet. Der kugelförmige Abschnitt 230 korrespondiert mit dem Kugelabschnitt 130 des Kopfstücks.

Die Steuerscheibe 30 weist eine im Wesentlichen elliptische Außenkontur auf, die an ihren Längsenden orthogonal zur Längsmittelachse gekürzt ist, wodurch zwei zueinander parallele Seitenflächen hervorgerufen sind. In die Steuerscheibe 30 ist mittig eine Sacklochbohrung 310 eingebracht, deren Durchmesser etwas größer ist, als der Durchmesser des kugelförmigen Endstücks 250 der Spindel 20. In montiertem Zustand greift das Endstück 250 in die Sacklochbohrung 310 ein. Auf der der Sacklochbohrung 310 gegenüberliegenden Seite der Steuerscheibe 30 ist eine Vertiefung 320 eingebracht, die eine der Außenkontur der Steuerscheibe 30 vergleichbare Form aufweist.

Die Einlassscheibe 40 weist auf ihrem Umfang zwei sich diametral gegenüberliegende Führungsnasen auf. Die Führungsnasen fassen in Führungsnuten des hülsenförmigen Teils 19 des Kopfstücks. Die Einlassscheibe 40 ist damit drehfest in dem Kopfstück angeordnet. In der Einlassscheibe 40 ist eine Durchtrittsöffnung 42 eingebracht, die eine angenähert sichelförmige Kontur aufweist und deren Spiegelsymmetrieachse auf der orthogonal zur Verbindungsachse der Führungsnasen liegt.

Die Scheibenführung 60 besteht aus einem zylindrischen Grundkörper 610, der an seiner der Armatur zugewandten Seite einen Führungsteller 630 aufweist. In den Grundkörper 610 ist entlang seiner Rotationsachse eine Spindelführung 660 eingebracht, die in Form eines Langlochs ausgeführt ist. Die Länge des Langlochs nimmt entlang der Rotationsachse des zylindrischen Grundkörpers in Richtung der Armatur zu; die Spindelführung 660 ist folglich im Wesentlichen kegelförmig ausgebildet. An ihrem der Armatur abgewandten Ende ist die Spindelführung 660 mit einer Kugelaufnahme 620 versehen. Die Kugelaufnahme 620 ist als Senkbohrung ausgeführt, deren Durchmesser größer als die Länge des Langlochs auf der der Armatur abgewandten Seite ist. Der Rand der Senkbohrung ist in Form einer gehäuften Fase 640 auf dem zylindrischen Grundkörper 610 ausgebildet, deren Außendurchmesser gegenüber dem Außendurchmesser des zylindrischen Grundkörpers 610 reduziert ist. Die dadurch ausgebildete ringförmige Fläche 670 zwischen der Fase 640 der Kugelaufnahme 620 und der Außenkante des zylindrischen Grundkörpers 610 dient zur Aufnahme eines O-Rings 98, der den kugelförmigen Abschnitt 230 der Spindel 20, welcher in der Kugelaufnahme 620 aufliegt, gegenüber der Scheibenführung 60 sowie dem Kopfstück abdichtet. Der O-Ring 98 ist durch eine Scheibe 981 gehalten.

Die Überwurfhülse 70 weist ein Gewindestück 710, an das sich ein Außensechskant 720 anschließt. Zwischen dem Gewindestück 710 und Außensechskant 720 ist eine Dichtungsnut 730 zur Aufnahme eines O-Rings 99 vorgesehen. Der O-Ring 99 dichtet das Ventiloberteil, welches mit Hilfe der Überwurfhülse 70 mit der Armatur verschraubt ist, gegen diese ab. Der Innendurchmesser der Überwurfhülse 70 entspricht dem Außendurchmesser des Zylinders 180. An Ihrem der Armatur zugewandten Ende ist die Überwurfhülse 70 innen mit einer Fase 750 versehen, die in montiertem Zustand des Ventiloberteils mit der Fase 170 des Kopfstücks korrespondiert. Die Fixierung des Oberteils in der Armatur erfolgt mittels einer Kontermutter 760, die auf das Außengewinde 190 des Kopfteils aufschraubbar ist.

Die Ventiloberteile nach den Ausführungsbeispielen gemäß den Figuren 13 bis 18 weisen jeweils im Bereich des Außengewindes 190 die Arretiervorrichtung 8 auf. Im Ausführungsbeispiel nach den Figuren 13 und 14 ist die Arretiervorrichtung 8 von einem Federbügel 84 gebildet. Der Federbügel 84 erstreckt sich im Wesentlichen entlang des Langlochs 140. An seinen beiden Stirnseiten 841 entspricht die Kontur des Federbügels der Außenkontur des Kopfstücks. Die Stirnseiten 841 fassen in eine umlaufende Nut 842, in der der Bügel sicher gehalten ist. Der Federbügel 84 ist in der Draufsicht in der Mitte eingezogen ausgeführt und ragt mit den dadurch ausgebildeten Einzügen 843 über das Langloch 140 des Kopfstücks. Die Einzüge 843 stehen in Berührung mit der Spindel 20.

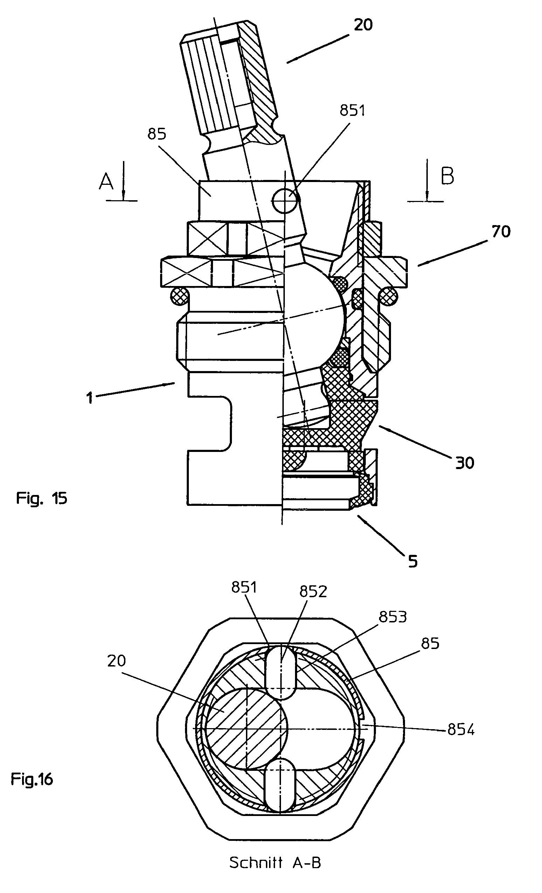

Im Ausführungsbeispiel nach den Figuren 15 und 16 ist um das Außengewinde 190 herum ein Federring 85 angeordnet. Der Federring 85 weist zwei sich gegenüberliegende Bohrungen 851 auf, in die zwei Kugelstifte 852 abschnittsweise hineinragen. Mit ihren den Bohrungen 851 abgewandten Enden ragen die Kugelstifte 852 über das Langloch 140 des Kopfstücks und stehen mit diesen mit der Spindel 20 in Kontakt. Die Kugelstifte 852 sind geführt in Bohrungen 853, die rechtwinklig zum Langloch 140 im Kopfstück angeordnet sind. Der Federring 85 ist im Ausführungsbeispiel um 90° versetzt zu den Bohrungen 851 mit einem durchgehenden Dehnungsspalt 854 versehen.

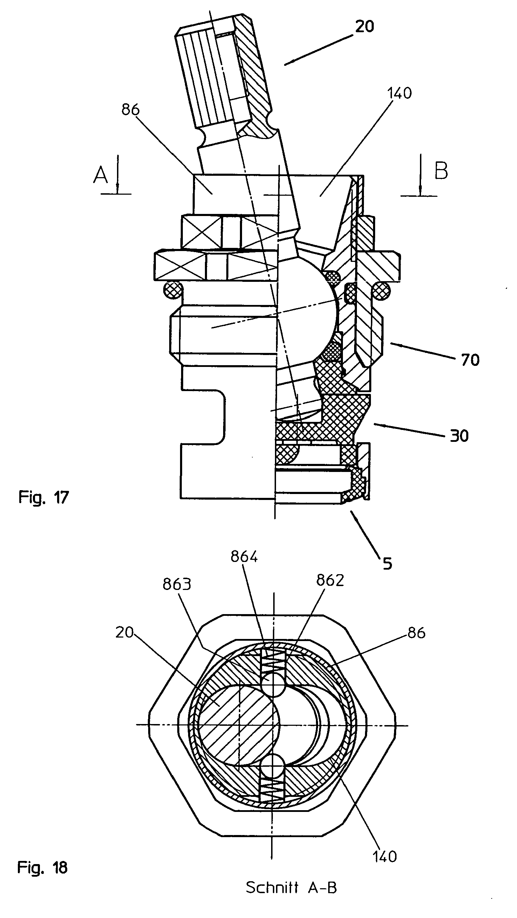

Im Ausführungsbeispiel nach den Figuren 17 und 18 ist auf dem der Armatur abgewandten Seite des Kopfstücks um das Außengewinde 190 herum die Arretiervorrichtung 8 in Form eines Rings 86 angeordnet. Im Kopfstück sind zwei rechtwinklig zum Langloch 140 ausgerichteten Bohrungen 862 vorgesehen. In die Bohrungen 862 sind zum einen Kugeln 863, zum anderen Federn 864 eingesetzt. Unter dem Einfluss der Feder 864 ragen die Kugeln 863 abschnittsweise in das Langloch 140 und stehen mit ihren den Federn 864 abgewandten Seiten mit der Spindel 20 in Kontakt.

Mit Hilfe der Arretiervorrichtung 8 ist an den Ventiloberteilen jeweils eine Arretierung der Spindel entweder in der Position "ganz offen" oder in der Position "ganz geschlossen" hervorgerufen. Unter dem Einfluss der jeweils auf die Spindel wirkenden Federkraft ist gewährleistet, dass die Spindel keine dauerhafte Zwischenposition einnehmen kann. Allen Ausführungsbeispielen gemeinsam ist, dass eine Bewegung der Spindel zu einer Spreizung des jeweiligen Federelements, gebildet von den Federdrähten 811, 814, den Federringen 824, 85, der Feder 833, 864 und dem Federbügel 84 führt. Hierzu ist das Aufbringen einer Kraft erforderlich. Beim Überwinden des größten durch die Federelemente hervorgerufenen Widerstands fährt die Spindel im Anschluss in die der Ausgangsposition entgegengesetzten Position.

Die größte Kraft ist dabei aufzuwenden bei den Ausführungsbeispielen nach den Figuren 1 bis 6 sowie 11 und 12 beim Überwinden der "Spitzen" der jeweiligen Kalotte 81 bzw. 83. Bei den Ausführungsbeispielen nach den Figuren 1 bis 4 werden hierzu die Schenkel des Federdrahtes gespreizt, um eine Drehung der Spindel mit der Kalotte 81 zu ermöglichen. Im Ausführungsbeispiel nach den Figuren 5 und 6 erfolgt eine Spreizung des Federrings 824. Dies ist hervorgerufen durch die erforderliche Überwindung der "Spitzen" der Kalotte durch die Kugeln 823. Die Kugeln 823 treten dabei aus den Bohrungen 822 gegen den Widerstand des Federrings 824 heraus. Die Dehnung des Federrings 823 ist aufgrund des Dehnspalts 828 möglich. In vergleichbarer Weise erfolgt die Betätigung des Ventiloberteils nach dem Ausführungsbeispiel der Figuren 7 und 8. Dabei ist es erforderlich, dass die Rollen 872 zur Betätigung der Spindel die Vertiefung 871 verlässt. Dies erfolgt gegen die Kraft des Federrings 824.

Im Ausführungsbeispiel nach den Figuren 13 und 14 ist es zum Betätigen der Spindel 20 erforderlich, den Einzug 843 des Federbügels 84 zu überwinden. Bei einer Betätigung der Spindel wird der Federbügel 84 im Bereich des Einzugs 843 gespreizt. Nach Passieren des Einzugs 843 fährt die Spindel 20 in die andere der beiden Positionen. Bei den Ausführungsbeispielen nach den Figuren 15 bis 18 ist eine Betätigung der Spindel 20 nur möglich, wenn die von den Kugelstiften 852 bzw. von den Kugeln 863 gebildete Verengung oberhalb des Langlochs 140 passiert wird. Durch eine Betätigung der Spindel 20 werden die Kugelstifte 852 bzw. die Kugeln 863 entgegen der auf diese wirkenden Federkräfte nach außen gedrückt, sodass ein Passieren der Verengung durch die Spindel 20 möglich ist.

In Bezug auf die verschiedenen Ausführungsformen der Arretiervorrichtung 8 ist anzumerken, dass die im Bereich des der Armatur abgewandten Endes des Kopfstücks 1, 10 angeordneten Vorrichtungen aufgrund ihrer einfachen Montage so wie des geringeren konstruktiven Aufwands zu bevorzugen sind. Die im Kopfstück angeordneten Arretiervorrichtungen bieten jedoch dagegen Vorteile hinsichtlich der Gefahr einer Verschmutzung. Zudem ist eine solche Arretierung nicht sichtbar in dem Ventiloberteil angeordnet.

In Abwandlung der dargestellten Ausführungsbeispiele besteht je nach Wunsch die Möglichkeit, die eingesetzten Kugeln oder Rollen durch Stifte oder Stäbe zu ersetzen und umgekehrt. Ebenso ist die Möglichkeit gegeben, die in den Federringen vorgesehenen Bohrungen durch Langlöcher zu ersetzen. Die Auswahl erfolgt im Wesentlichen in Abstimmung mit den eingesetzten Kugeln, Rollen bzw. Stiften. Zudem kann in Abwandlung der dargestellten Ausführungsbeispiele die Arretiervorrichtung anstelle eines Federrings mit einem Elastomer oder einem in sich geschlossenen federnden Band versehen sein.

Der Einsatz der dargestellten Kalotten ermöglicht eine 90°-Begrenzung zwischen ganz geöffneter und ganz geschlossener Position des Ventiloberteils. Bei den Ausführungsbeispielen nach den Figuren 13 bis 16 hängt dagegen der Winkel, um den die Steuerscheibe 30 gedreht wird, um von einer Position in die andere zu gelangen, von der Geometrie des Ventiloberteils in Abhängigkeit von der Anzahl der Kalotten, die in die Spindel eingearbeitet sind, und Anzahl der Kugeln bzw. Rollen ab. Es sind hier verschiedene Winkel, beispielsweise 90° oder 180° oder auch 360°, möglich.

## Patentansprüche

1. Ventiloberteil für Armaturen mit einem Kopfstück, das von einer Spindel durchsetzt ist, mit Mitteln zum Absperren und mit einer Dichtung, die mit der Armatur zur Anlage kommt, **dadurch gekennzeichnet, dass** eine radial wirkende Arretiervorrichtung (8) vorgesehen ist.

2. Ventiloberteil nach Anspruch 1, **dadurch gekennzeichnet, dass** die Arretiervorrichtung (8) im Kopfstück (1, 10) angeordnet ist.

3. Ventiloberteil nach Anspruch 1, **dadurch gekennzeichnet, dass** die Arretiervorrichtung (8) im Bereich des der Armatur abgewandten Endes des Kopfstücks (1, 10) angeordnet ist.

4. Ventiloberteil nach einem der Ansprüche 1 bis 3, **dadurch gekennzeichnet, dass** die Arretiervorrichtung (8) eine Kalotte (81, 829, 83) beinhaltet.

5. Ventiloberteil nach einem der Ansprüche 1 bis 4, **dadurch gekennzeichnet, dass** ein Federelement in Form eines Federdrahtes (811, 814) vorgesehen ist.

6. Ventiloberteil nach einem der Ansprüche 1 bis 4, **dadurch gekennzeichnet, dass** ein Federelement in Form eines Federringes (824, 833, 85) vorgesehen ist.

7. Ventiloberteil nach Anspruch 6, **dadurch gekennzeichnet, dass** der Federring (824, 833, 85) einen Dehnsoalt (828, 835, 854) aufweist.

8. Ventiloberteil nach einem der Ansprüche 1 bis 7, **dadurch gekennzeichnet, dass** die Arretiervorrichtung (8) eine Ringfläche (82) beinhaltet, die nach Art eines Vielkants ausgebildet ist.

9. Ventiloberteil nach einem der Ansprüche 1 bis 4, **dadurch gekennzeichnet, dass** ein Federelement vorgesehen ist, das mit einem Elastomer versehen ist.

10. Ventiloberteil nach einem der Ansprüche 1 bis 4, **dadurch gekennzeichnet, dass** ein Federelement vorgesehen ist, das mit einem geschlossenen federnden Band versehen ist.
